# DEMANDE DE BREVET EUROPEEN

(11) **EP 0 639 780 A1**
(43) Date de publication de la demande: **22.02.1995**
(21) Numéro de dépôt: 94401858.9
(22) Date de dépôt: 16.08.1994
(51) Int. Cl.: G02B 6/255

(54) **Procédé de formation de dioptres de couplage aux extrémités de fibres optiques**

(30) Priorité: 18.08.1993 FR 9310077
(71) Demandeur: ALCATEL N.V., NL-1077 XX Amsterdam (NL)
(72) Inventeur: Le Bris, Jean, F-91480 Quincy sous Senart (FR)
(74) Mandataire: Fournier, Michel

(57) **Abrégé**

Pour permettre à des forces de tension superficielle de donner à une extrémité de fibre optique (P1) une forme permettant un bon couplage optique on fait fondre partiellement cette extrémité dans un arc électrique (ZC). Pour améliorer la reproductibilité de cette forme, le passage dans l'arc est réalisé par un déplacement unidirectionnel latéral (MC) de la fibre. L'invention s'applique notamment au couplage d'une nappe de fibres optiques à une barrette de composants tels que des lasers semi-conducteurs. Pour cela les fibres (F1...F6) sont fixées dans des rainures d'un porte fibre (2). Ce dernier est déplacé pour tremper simultanément les extrémités des fibres dans un bain d'attaque chimique qui leur donne une forme en pointe, puis pour les faire passer successivement dans l'arc électrique.

## Description

La présente invention s'applique à la formation, aux extrémités de fibres optiques de verre, notamment de silice, de surfaces dioptriques facilitant le couplage optique de ces fibres à d'autres composants optiques.

Un procédé connu pour réaliser une telle conformation comporte les opérations de base suivantes:
- Fixation de fibre. Il s'agit de fixer un tronçon rectiligne d'une fibre optique à un porte fibre mobile de manière que ce tronçon s'étende jusqu'à une extrémité de cette fibre située à distance de ce porte fibre.
- Conformation chimique préalable. Il s'agit de donner à l'extrémité de la fibre une forme intermédiaire par trempage de cette extrémité dans un bain d'attaque.
- Préparation de chauffage. Il s'agit de préparer un moyen de chauffage suffisant pour faire fondre le verre de la fibre.
- Enfin déplacement de chauffage. Il s'agit de déplacer le porte fibre pour faire entrer l'extrémité de la fibre dans la zone d'action du moyen de chauffage et pour l'en faire sortir. La durée du séjour de cette extrémité dans cette zone est telle que cette extrémité fonde partiellement. Elle est plus précisément telle que des forces de tension superficielle et/ou de gravité modifient la forme de cette extrémité pour la faire passer de la forme intermédiaire précédemment réalisée à une forme souhaitée finale permettant un bon couplage optique.

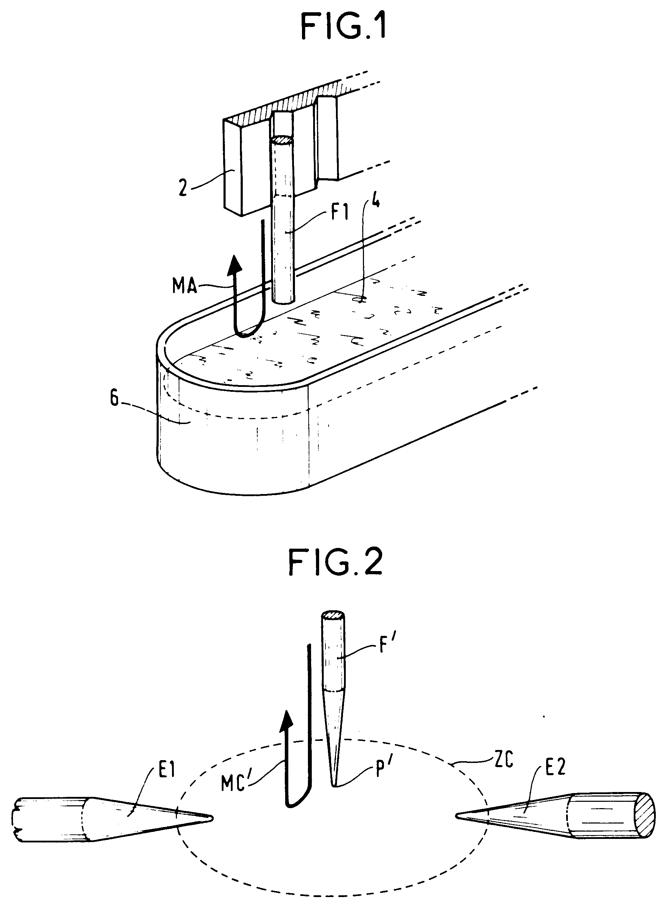

Ce procédé connu est illustré partiellement à la figure 2 sur laquelle F' représente un tronçon de fibre optique vertical et P' l'extrémité inférieure à conformer de ce tronçon. La zone de chauffage ZC est occupée par un plasma créé par un arc électrique formé entre deux électrodes E1 et E2.

Dans ce procédé connu le déplacement de chauffage MC' est un déplacement vertical comportant une descente et une remontée pour tremper temporairement l'extrémité à conformer P' dans la zone de chauffage ZC.

Ce procédé connu présente l'inconvénient que ses résultats restent imparfaitement reproductibles malgré des dispositions prises pour les rendre reproductibles. De telles.dispositions sont les suivantes:
- l'arc électrique est soigneusement stabilisé,
- les vitesses de descente et de montée et la position du point le plus bas atteint par l'extrémité à conformer sont soigneusement conservées de l'un à l'autre de deux traitements de conformation d'extrémité appliqués successivement à deux fibres optiques,
- ces fibres sont choisies identiques au départ, et elles ont subi les mêmes traitements préalables de conformation chimique.

Malgré ces dispositions les formes conférées aux extrémités de ces deux fibres ne sont pas aussi voisines qu'on le souhaite. Ce défaut de reproductibilité empêche dans beaucoup de cas de s'approcher autant qu'on le souhaiterait d'une forme optimale qui n'est obtenue qu'exceptionnellement.

La présente invention a notamment pour but de permettre de donner de manière simple à l'extrémité d'une fibre optique une forme mieux reproductible que précédemment.

Dans ce but elle a pour objet un procédé de formation de dioptres de couplage aux extrémités de fibres optiques, procédé dans lequel un déplacement d'une extrémité de fibre à conformer fait passer cette extrémité dans une zone de chauffage pour la faire fondre partiellement, ce procédé étant caractérisé par le fait que ce déplacement est unidirectionnel et latéral.

La figure 1 représente une opération de conformation chimique préalable faisant partie aussi bien du procédé connu précédemment mentionné que du procédé selon la présente invention.

La figure 2 a déjà été décrite et représente une opération de déplacement de chauffage faisant partie de ce procédé connu.

La figure 3 représente une opération de déplacement de chauffage du procédé selon cette invention.

La figure 4 représente un appareil utilisé pour effectuer l'opération de la figure 3.

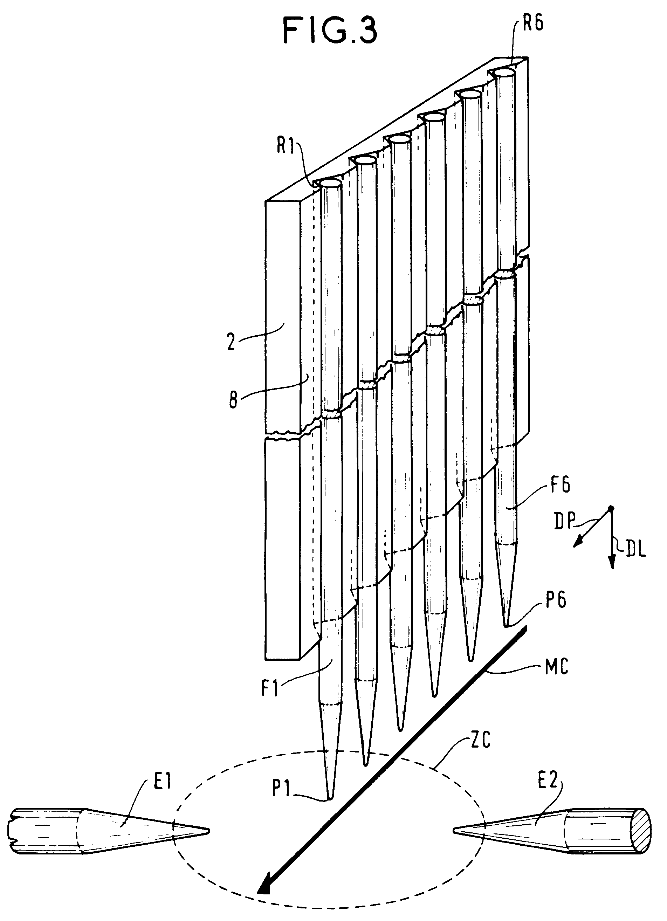

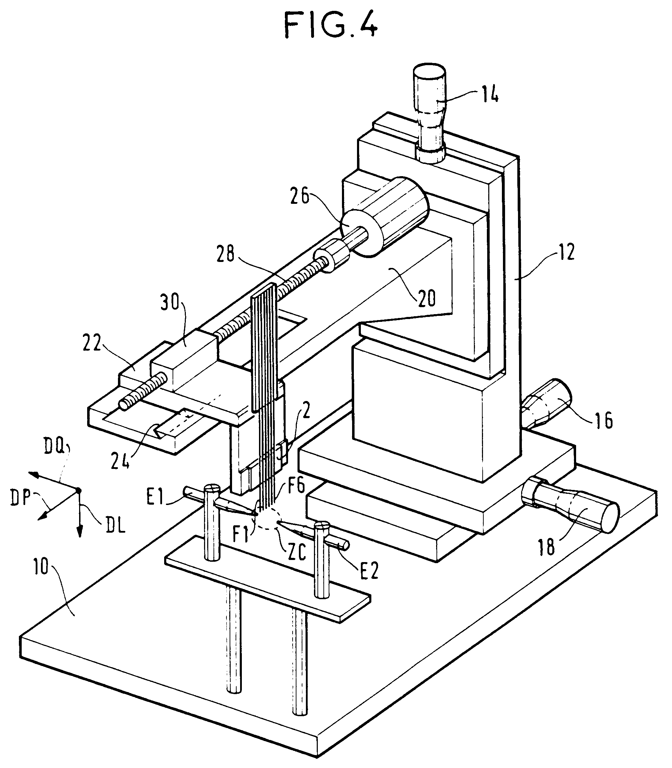

Conformément aux figures 3 et 4 le procédé selon la présente invention comporte les opérations connues suivantes:
- Fixation de fibre. On fixe un tronçon rectiligne d'une fibre optique F1 à un porte fibre mobile 2 de manière que ce tronçon s'étendre en ligne droite à partir de ce porte fibre jusqu'à une extrémité à conformer P1 de cette fibre située à distance de ce porte fibre. Cette fibre est constitué d'un verre qui est typiquement de la silice. Le procédé est mis en oeuvre de manière que cette extrémité reste solidaire du porte fibre. La direction de ce tronçon constitue une direction longitudinale DL.
- Préparation de chauffage. On met en oeuvre un moyen de chauffage propre à faire fondre ledit verre si ce verre séjourne dans une zone de chauffage localisée ZC définie par ce moyen de chauffage. Ce moyen est constitué typiquement par un arc électrique stabilisé formant un plasma entre deux électrodes E1 et E2.
- Enfin déplacement de chauffage. Cette opération est constituée par un déplacement du porte fibre 2 en translation pour faire entrer l'extrémité à conformer P1 dans la zone de chauffage ZC et pour l'en faire sortir après une période de séjour de cette extrémité dans cette zone. La durée de cette période est limitée et telle que cette extrémité fonde partiellement pour que des forces de tension superficielle et/ou de gravité lui donne une forme souhaitée.

Conformément à la présente invention le déplacement de chauffage MC est un déplacement unidirectionnel du porte fibre 2 selon une direction de passage latérale DP formant un angle avec la direction longitudinale DL, et la vitesse de ce déplacement est stabilisée sur une période de déplacement régulier commençant avant et se terminant après ladite période de séjour.

Des dispositions complémentaires et préférées sont mises en oeuvre dans le procédé donné en exemple et sont les suivantes:

Le déplacement de chauffage MC est rectiligne.

La direction de passage DP est une direction transversale perpendiculaire à la direction longitudinale DL.

La direction longitudinale DL est verticale, et l'extrémité à conformer P1 est située au dessous du porte fibre.

L'opération de fixation de fibre comporte la fixation d'une pluralité de tronçons de fibres optiques F1...F6. Ces tronçons sont identiques les uns aux autres et se succèdent après cette fixation selon une direction de succession DP définie par ce porte fibre. Dans ce cas la direction de passage DP est parallèle à cette direction de succession.

De plus, dans ce même cas, de préférence, le porte fibre 2 est constitué de silicium monocristallin et comporte une pluralité de rainures en Vé, mutuellement identiques R1...R6 s'étendant selon la direction longitudinale DL. Ces rainures se succèdent à intervalles réguliers selon la direction de succession DP sur une face 8 de ce porte fibre. Cette face et des flancs de ces rainures sont formés selon des plans cristallographiques privilégiés de ce porte fibre. C'est dans cette pluralité de rainures qu'est fixée ladite pluralité de tronçons de fibre F1...F6, respectivement, ceci par exemple par collage. Le déplacement de chauffage MC sera dans ce cas rectiligne.

Il est connu qu'une telle pluralité de fibres formant une nappe et fixées à un tel porte fibre facilite le couplage de ces fibres à une barrette de composants optiques tels que des lasers semiconducteurs. Il suffit pour cela que ces fibres se succèdent avec le même intervalle que ces composants.

De préférence, d'une manière analogue à ce qui est connu pour une fibre unique, après l'opération de fixation de fibre et avant l'opération de déplacement de chauffage, on effectue une opération de conformation chimique préalable du genre qui a été précédemment mentionné pour la conformation d'une seule extrémité de fibre par un procédé connu. Cette opération de conformation préalable est composite et comporte elle même les opérations suivantes, qui sont présentées à la figure 1:
- Préparation d'un bain d'attaque 4 liquide dans un récipient d'attaque 6 ouvert vers le haut.
- Positionnement du porte fibre 2 au dessus de ce récipient d'attaque. La direction longitudinale DL des fibres est alors verticale, les extrémités P1...P6 à conformer sont disposées au dessous du porte fibre, et la direction de succession DP est horizontale.
- Enfin trempage des fibres par déplacement vertical MA du porte fibre 2. Ce porte fibre effectue une descente et une remontée pour immerger temporairement les extrémités à conformer telles que P1 dans ce bain de manière qu'elles présentent une forme intermédiaire en pointe après cette opération de trempage. Cette forme intermédiaire est telle que ces fibres présenteront ultérieurement, après l'opération de déplacement de chauffage, une forme en lentille optique constituant ladite forme souhaitée.

Après cette dernière opération le porte fibre 2 et les fibres pourront être placés en regard d'une barrette de composants optiques semiconducteurs tels que des lasers ou des diodes réceptrices, par exemple, pour assurer simultanément les couplages respectifs de ces fibres à ces composants.

La bonne reproductibilité de conformation que la présente invention permet d'atteindre aisément a alors pour avantage d'autoriser une amélioration sensible de la qualité de ces couplages.

Conformément à la figure 4 un appareil de mise en oeuvre du procédé précédemment décrit comporte les éléments suivants disposés sur une table commune 10:
- Des électrodes E1 et E2 munies de moyens d'alimentation électrique et d'avance non représentés pour réaliser un arc électrique stable.
- Un organe de réglage tridimensionnel 12 permettant, à l'aide de manettes 14, 16 et 18, un réglage de la position d'un plateau 20 selon les directions longitudinale DL, de passage DP, et selon une troisième direction DQ perpendiculaire aux deux précédentes.
- Un chariot 22 guidé selon la direction de passage DP par un Vé de guidage 24 formé sur le plateau 20.
- Un moteur 26 pour entraîner le déplacement de ce chariot par l'intermédiaire d'une vis 28 et d'un écrou 30.
- Et le porte fibre 2 portant la nappe constituée par les fibres F1 à F6.

L'amplitude du déplacement du chariot 22 est choisie fortement supérieure à la largeur de cette nappe de fibres augmentée de la largeur du plasma formé entre les électrodes E1 et E2. De plus des moyens non représentés sont prévus pour stabiliser la vitesse du moteur 26, de manière à ce que la vitesse du déplacement de cette nappe soit définie avec précision lors de son passage dans ce plasma.

## Revendications

**1/** Procédé de formation de dioptres de couplage aux extrémités de fibres optiques, procédé dans lequel un déplacement d'une extrémité de fibre à conformer (P1) fait passer cette extrémité dans une zone de chauffage (ZC) pour la faire fondre partiellement, ce procédé étant caractérisé par le fait que ce déplacement est unidirectionnel et latéral (MC).

**2/** Procédé selon la revendication 1, ce procédé comportant les opérations suivantes:
- fixation de fibre pour fixer un tronçon rectiligne d'une fibre optique (F1) à un porte fibre mobile (2) de manière que ce tronçon s'étende en ligne droite à partir de ce porte fibre jusqu'à une extrémité à conformer (P1) de cette fibre située à distance de ce porte fibre et solidaire de celui-ci, la direction de ce tronçon constituant une direction longitudinale (DL), cette fibre optique étant constituée d'un verre,
- préparation de chauffage par mise en oeuvre d'un moyen de chauffage (E1, E2) propre à faire fondre ledit verre si ce verre séjourne dans une zone de chauffage (ZC) localisée définie par ce moyen de chauffage,
- et déplacement de chauffage, cette opération étant constituée par un déplacement dudit porte fibre (2) en translation pour faire entrer ladite extrémité à conformer (P1) dans ladite zone de chauffage (ZC) et pour l'en faire sortir après une période de séjour de cette extrémité dans cette zone, la durée de cette période étant limitée et telle que cette extrémité fonde partiellement pour que des forces de tension superficielle et/ou de gravité lui donne une forme souhaitée,
- ce procédé étant caractérisé par le fait que ledit déplacement de chauffage (MC) est un déplacement unidirectionnel du porte fibre (2) selon une direction de passage latérale (DP) formant un angle avec ladite direction longitudinale (DL), la vitesse de ce déplacement étant stabilisée sur une période de déplacement régulier commençant avant et se terminant après ladite période de séjour.

**3/** Procédé selon la revendication 2, caractérisé par le fait que ledit déplacement de chauffage (MC) est rectiligne.

**4/** Procédé selon la revendication 2, caractérisé par le fait que ladite direction de passage (DP) est une direction transversale perpendiculaire à ladite direction longitudinale (DL).

**5/** Procédé selon la revendication 2, caractérisé par le fait que ladite direction longitudinale (DL) est verticale, ladite extrémité à conformer (P1) étant située au-dessous dudit porte fibre (2).

**6/** Procédé selon la revendication 2, caractérisé par le fait que ladite opération de fixation de fibre comporte la fixation d'une pluralité de dits tronçons de fibres optiques (F1...F6), ces tronçons étant identiques les uns aux autres et se succèdant après cette fixation selon une direction de succession (DP) définie par ce porte fibre, ladite direction de passage (DP) étant parallèle à cette direction de succession.

**7/** Procédé selon la revendication 6, caractérisé par le fait qu'après ladite opération de fixation de fibre et avant ladite opération de déplacement de chauffage, il comporte une opération de conformation chimique préalable comportant elle même les opérations suivantes:
- préparation d'un bain d'attaque (4) liquide dans un récipient d'attaque (6) ouvert vers le haut,
- positionnement dudit porte fibre (2) au dessus de ce récipient d'attaque, ladite direction longitudinale (DL) des fibres étant verticale, lesdites extrémités (P1...P6) à conformer étant disposées au dessous du porte fibre, ladite direction de succession (DP) étant horizontale,
- et trempage des fibres par déplacement vertical (MA) du porte fibre (2) en descente et remontée pour immerger temporairement lesdites extrémités à conformer (P1) dans ce bain de manière qu'elles présentent une forme intermédiaire en pointe après cette opération de trempage et qu'elles présentent ultérieurement, après ladite opération de déplacement de chauffage, une forme en lentille optique constituant ladite forme souhaitée.

**8/** Procédé selon la revendication 6, caractérisé par le fait que ledit porte fibre (2) est constitué de silicium monocristallin et comporte une pluralité de rainures en Vé, mutuellement identiques (R1...R6) s'étendant selon ladite direction longitudinale (DL) et se succédant à intervalles réguliers selon ladite direction de succession (DP) sur une face (8) de ce porte fibre, cette face et des flancs de ces rainures étant formées selon des plans cristallographiques privilégiés de ce porte fibre, ladite opération de fixation de fibre comportant la fixation de ladite pluralité de tronçons de fibre (F1...F6) dans cette pluralité de rainures, respectivement, ledit déplacement de chauffage (MC) étant rectiligne.

**9/** Procédé selon la revendication 2, caractérisé par le fait que ledit moyen de chauffage comporte des électrodes (E1, E2) pour créer un arc électrique stabilisé formant un plasma occupant ladite zone de chauffage (ZC).
